# EUROPÄISCHE PATENTANMELDUNG

(11) **EP 2 455 560 A2**
(43) Veröffentlichungstag der Anmeldung: **23.05.2012**
(21) Anmeldenummer: 11188909.3
(22) Anmeldetag: 11.11.2011
(51) Int. Cl.: E04D 1/04, E04D 3/18, E04D 13/00, C04B 41/00

(54) **Dachplatte mit hydrophiler, dem Wettereinfluss ausgesetzter Oberseite**

(30) Priorität: 18.11.2010 DE 102010051843
(71) Anmelder: Eternit AG, 69126 Heidelberg (DE); Redco NV, 1880 Kapelle-op-den-Bos (BE)
(72) Erfinder: Schmidt, Gerhard, 76669 Bad Schönborn (DE); Kalbskopf, Reinhard, Dr., 3080 Tervuren (BE)
(74) Vertreter: Henkel, Breuer & Partner

(57) **Zusammenfassung**

Bei zementgebunden, planebenen Dachplatten, die als Betondachstein oder als Faserzementplatte ausgebildet sind und eine hydrophile, dem Wettereinfluß ausgesetzte Oberseite aufweisen, wird eine Beeinträchtigung des optischen Erscheinungsbildes durch eingetrocknete Rückstände von aus den Dachplatten bei Beregnung ausgewaschenen Stoffen vermieden, indem die Unterseite der Dachplatte eine hydrophobe Beschichtung aufweist.

## Beschreibung

Die Erfindung betrifft eine Dachplatte, vorzugsweise eine planebene Dachplatte, die als Betondachstein oder als Faserzementplatte ausgebildet ist und eine hydrophile, dem Wettereinfluss ausgesetzte Oberseite besitzt.

Der Begriff "Oberseite" bezieht sich auf die Seite der Dachplatte, die die im eingebauten Zustand dem Wettereinfluss (z.B. durch Beregnung, Schneefall und dgl.) zugewandte Dach-Außenseite bildet, während der Begriff Unterseite" die zum Bauwerk gerichtete Seite der Dachplatte meint.

Dachplatten mit hydrophiler Oberfläche, auch an der Oberseite, sind bekannt. Die hydrophile Oberfläche, die in der Regel durch einer Beschichtung der Dachplatte mit bekannten Mitteln, z.B. Acrylaten oder Silikaten, vorzugsweise in wasserhaltiger Beschichtung erzielt wird, aber auch eine Eigenschaft des Materials der Dachplatte selbst sein kann, bewirkt eine verbesserte Selbstreinigung der beregneten Dachplatte. Zusätzlich kann die Oberseite der Dachplatte ein photokatalytisch-aktives Material enthalten. Hierfür sind Ti0₂- und ZnO-Partikel, Zinksilikat- und Zinktitanat-Verbindungen und weitere Materialien bekannt. Die photokatalytisch-aktiven Materialien wirken biozid und verhindern oder verringern dadurch den Bewuchs der Oberfläche mit Moos, Algen, Schimmel, usw. Gleichzeitig senken sie die NOₓ-Belastung durch Oxidation der Stickoxyde zu molekularem Stickstoff.

Insbesondere bei planebenen bzw. flachen zementgebundenen Dachbelägen wie Betondachsteinen und Faserzementplatten mit einer derartigen Oberflächenbeschichtung hat sich allerdings gezeigt, dass sich nach Beregnung, insbesondere nach mehrfachem Beregnen und Abtrocknen, ein dauerhafter, meist grau-weißer Niederschlag bildet, vor allem in dem Bereich, in welchem die Fuge zwischen zwei oberhalb einer anderen Dachplatte befindlichen und letztere überlappenden Dachplatten mündet. Insbesondere bei dunkelfarbigen Dachplatten stellt dieser Niederschlag eine erhebliche optische Beeinträchtigung dar.

Der Erfindung liegt die Aufgabe zugrunde, eine Dachplatte, die als Betondachstein oder als Faserzementplatte ausgebildet ist und eine hydrophile, dem Wettereinfluß ausgesetzte Oberseite besitzt, so zu verbessern, dass eine damit eingedeckte Dachfläche ein dauerhaft einwandfreies optisches Aussehen hat.

Diese Aufgabe ist erfindungsgemäß durch eine Dachplatte gemäß Anspruch 1 gelöst, bei der im wesentlichen nur die Unterseite eine hydrophobe Beschichtung aufweist und die dem Wettereinfluß ausgesetzte Oberseite weiterhin hydrophil gehalten wird. Bevorzugte Ausgestaltungen sind in den Unteransprüchen angegeben.

Der Erfindung liegt die Erkenntnis zugrunde, dass anders als bei gewellten Dachplatten der Überdeckungsbereich bei flachen bzw. planebenen Dachplatten eine kapillar wirkende Spaltfläche bildet, in der infolgedessen nach Beregnung ein dünner Wasserfilm entsteht. Während die freiliegenden Flächen wegen der hydrophilen Oberflächenbeschichtung rasch abtrocknen, bleibt der Wasserfilm längere Zeit erhalten. Das hat zur Folge, dass lösliche Stoffe aus dem zementgebundenen Material der überlappenden Dachplatten über deren Unterseite in den Wasserfilm ausgewaschen werden und in Lösung gehen. Bei zementgebundenen Dachplatten wie Betondachsteinen sind dies vor allem Zementsalze. Mit zunehmender Austrocknung der kapillaren Spaltfläche fallen die in Lösung gegangenen Stoffe aus und sammeln sich bevorzugt an der traufseitigen Kante der jeweiligen Dachplatten. Bei erneuter Beregnung gehen diese Stoffe erneut in Lösung und werden insbesondere in den Fugenbereichen der sich seitlich überlappenden Dachplatten durch die vermehrte Wasserführung bevorzugt dort ausgewaschen. Dadurch gelangen sie auf die Oberfläche der darunter liegenden Dachplatten. Mit der Abtrocknung der freiliegenden Oberflächen fallen die Stoffe erneut aus und bilden dadurch den eingangs genannten, grau-weißen Niederschlag. Neben der Beeinträchtigung des Aussehens eines eingedeckten Daches hat dieser Niederschlag bei Dachplatten, deren Oberflächenbeschichtung auch photokatalytisch-aktive Bestandteile enthält, den Nachteil, die katalytische Wirkung durch im Laufe der Zeit zunehmende Vergiftung unwirksam zu machen.

Im Fall von Dachplatten aus Faserzement ist die hydrophobe Beschichtung vorzugsweise diffusionsoffen, denn bei einer dampfdichten, hydrophoben Beschichtung besteht das Risiko, dass die Faserzement-Dachplatten sich unter Feuchtigkeitseinfluss verformen, also nicht mehr planeben bleiben.

Zur Hydrophobierung der Unterseite der Dachplatten können an sich bekannte Hydrophobierungsmittel, z.B. Siloxane, Silikone, Stearate und sonstige Stoffe mit einem großen Kontaktwinkel gegenüber Wasser verwendet werden.

## Patentansprüche

1. Dachplatte, die als Betondachstein oder als Faserzementplatte ausgebildet ist, mit hydrophiler, dem Wettereinfluß ausgesetzter Oberseite,
**dadurch gekennzeichnet, dass** die Unterseite der Dachplatte eine hydrophobe Beschichtung aufweist.

2. Dachplatte nach Anspruch 1, **dadurch gekennzeichnet, dass** die hydrophobe Beschichtung diffusionsoffen ist.

3. Dachplatte nach Anspruch 1 oder 2, **dadurch gekennzeichnet, dass** die hydrophile Oberseite mindestens ein photokatalytisch-aktives Material enthält.

4. Dachplatte nach einem der Ansprüche 1 bis 3, **dadurch gekennzeichnet, dass** die hydrophobe Beschichtung der Unterseite der Dachplatte ein Hydrophobierungsmittel aus der Gruppe der Siloxane, Silikone und/oder Stearate aufweist.

5. Dachplatte nach einem der Ansprüche 1 bis 4, **dadurch gekennzeichnet, dass** die hydrophile Oberseite durch eine Beschichtung der Dachplatte oder eine Eigenschaft des Materials der Dachplatte selbst gebildet ist.
